# EUROPÄISCHE PATENTANMELDUNG

(11) **EP 1 915 898 A1**
(43) Veröffentlichungstag der Anmeldung: **30.04.2008**
(21) Anmeldenummer: 07019009.5
(22) Anmeldetag: 27.09.2007
(51) Int. Cl.: A01D 46/247

(54) **Vorrichtung zum Ernten von Oliven und anderen auf Bäumen und Sträuchern wachsenden Früchten**

(30) Priorität: 26.10.2006 DE 102006051163
(71) Anmelder: Hüttich, Hans, Sidi el Mehersi km 4.5 8000 Nabeul (TN)
(72) Erfinder: Hüttich, Hans, Sidi el Mehersi km 4.5 8000 Nabeul (TN)
(74) Vertreter: Donath, Dirk

(57) **Zusammenfassung**

Die Erfindung betrifft eine Vorrichtung zum Ernten von Oliven und anderen auf Bäumen oder Sträuchern wachsenden Früchten.

Die Aufgabe der Erfindung, eine Vorrichtung zum Ernten von Oliven und anderen auf Bäumen oder Sträuchern wachsenden Früchten anzugeben, die eine Ansammlung qualitativ einwandfreier Früchte, frei von Blättern, Ästen usw. ermöglicht, wird dadurch gelöst, dass die Vorrichtung folgende Komponenten umfasst :
eine Auffangeinheit (1), ein Weiterleitungselement (2) und eine Sammeleinheit (3), wobei die Auffangeinheit (1)
• eine Auffangöffnung (11) aufweist, in der eine menschliche Hand platzierbar ist, und
• über das Weiterleitungselement (2) mit der Sammeleinheit (3) verbunden ist, so dass sphärische Gegenstände durch die Auffangöffnung (11) hindurch von der Auffangeinheit (1) in die Sammeleinheit (3) gelangen können, indem sie sich durch das Weiterleitungselement (2) hindurch bewegen.

## Beschreibung

Die Erfindung betrifft eine Vorrichtung zum Ernten von Oliven und anderen auf Bäumen oder Sträuchern wachsenden Früchten.

Die traditionelle Olivenernte umfasst vier Arbeitsschritte:
1. Zu Beginn der Arbeit werden Tücher oder Planen sorgfältig unter dem abzuerntenden Olivenbaum ausgebreitet.
2. Danach raufen die Erntenden mit den bloßen Händen oder mit groben Holzkämmen die Oliven samt Blätter und Verästelungen von den Zweigen bzw. Ästen. (Bei den herabgefallenen Oliven wird dabei oft wenig darauf geachtet, was an Oliven von den Erntehelfern zusammengetreten wird.)
3. Ist ein Baum weitgehend von den Oliven geleert, werden die Tücher zusammengeschlagen und alles Heruntergefallene zu einem Haufen zusammengeschoben.
4. Danach beginnt das Aussortieren bzw. Handverlesen der Oliven in Behälter verschiedener Art und Größe.

Erst dann steht das Erntegut; die sauberen Oliven, bspw. in große Säcke gefüllt, für den Abtransport bereit.

Im Zuge der Technisierung und des wachsenden Bedarfs an Oliven kommen mittlerweile verschiedenste Erntemethoden und Erntehilfsmittel bei der Olivenernte zum Einsatz.

Anknüpfend an das traditionelle Olivenkämmen offenbart bspw. die Schrift EP 1 040 747 A1 einen Kamm für ein Olivenpflückgerät.

Auch sind verschiedenste Maschinen und Vorrichtungen zum Abklopfen bzw. Abschütteln von Oliven bekannt. Dabei kommen diverse Rüttler und Auffangvorrichtungen zum Einsatz.

So offenbart bspw. EP 1 654 922 eine Schüttelvorrichtung für das Ernten von Früchten, wie bspw. Oliven. Dabei sind einzelne, rotierende Schüttelelemente vorgesehen, die in die Zweige bzw. Äste des abzuerntenden Baumes / Strauches gehalten werden. Die abgeschüttelten Früchte landen dabei auf dem Boden bzw. auf einem Auffangtuch.
Die Schrift DE 94 13 282 U1 offenbart eine Erntemaschine für Oliven / Früchte, umfassend einen Rüttler und einen Auffangschirm, wobei beide an einem Fahrzeug/Traktor angebaut sind.

Aus der Schrift EP 1 350 422 A1 ist ein mechanisches System zum Sammeln von Oliven und dergleichen bekannt, bei dem kugelförmige Körper in einen abzuerntenden Baum geschossen werden um die Früchte zu ernten.

Aus EP 1 116 432 B1 ist ein tragbares Gerät zum Ernten von Kleinfrüchten, wie bspw. Oliven bekannt, das einen Erntekopf mit einer beweglichen Kammer und mobilen Fingern aufweist, wobei vermittels der Finger das Geäst im Betreibszustand des Gerätes geschüttelt wird und vermittels der Kammer ein Auffangen des Schüttelguts erfolgt.

Aus EP 1 070 449 A1 ist ein Verfahren und ein Apparat zum Ernten von Oliven bekannt, bei dem das Geäst des abzuerntenden Baumes mit Druckluft beaufschlagt wird, um die Früchte/ Blätter und Zweigteile in einen Fangschirm zu bewegen.

Aus EP 1 107 659 A1 ist eine Windmaschine zum Ernten von Oliven bekannt.

Der Nachteil aller zuvor stehend genannten Vorrichtungen und Methoden ist, dass die Bäume bzw. Sträucher bei der Ernte der Früchte beschädigt werden und dass die geernteten Früchte nachsortiert werden müssen, um diese rein und qualitativ hochwertig zu erhalten.

Die Aufgabe der Erfindung besteht darin, die zuvor stehend genannten Nachteile des Standes der Technik zu vermeiden, insbesondere eine Vorrichtung zum Ernten von Oliven und anderen auf Bäumen oder Sträuchern wachsenden Früchten anzugeben, die eine Ansammlung qualitativ einwandfreier Früchte, frei von Blättern, Ästen usw. ermöglicht.

Gemäß der Erfindung wird diese Aufgabe durch die kennzeichnenden Merkmale des ersten Patentanspruches gelöst sowie durch vorteilhafte Ausgestaltungen gemäß den Unteransprüchen ergänzt.

Das Wesen der Erfindung besteht darin, dass die Vorrichtung eine Auffangeinheit, ein Weiterleitungselement und eine Sammeleinheit umfasst, wobei die Auffangeinheit über das Weiterleitungselement mit der Sammeleinheit verbunden ist, so dass sphärische Gegenstände von der Auffangeinheit in die Sammeleinheit gelangen können, indem sie sich durch das Weiterleitungselement hindurch bewegen. Dabei ist die Vorrichtung tragbar und besteht aus leichten Materialien, wie bspw. Kunststoff.

Die Auffangeinheit ist dabei derart ausgestaltet, dass sie eine Auffangöffnung aufweist auf der eine menschliche Hand platzierbar ist, und dass sie im Betriebszustand vermittels eines Halteelements am Unterarm eines Erntehelfers befestigbar ist, wobei die sphärischen Gegenstände durch die Auffangöffnung hindurch in die Auffangeinheit gelangen können.

Die Sammeleinheit ist mit einem verstellbaren Tragelement versehen, so dass sie im Betriebszustand von einem Erntehelfer umgehängt werden kann.

Die Erfindung wird nachstehend an Hand der schematischen Zeichnung und des Ausführungsbeispieles näher erläutert. Dabei zeigt:

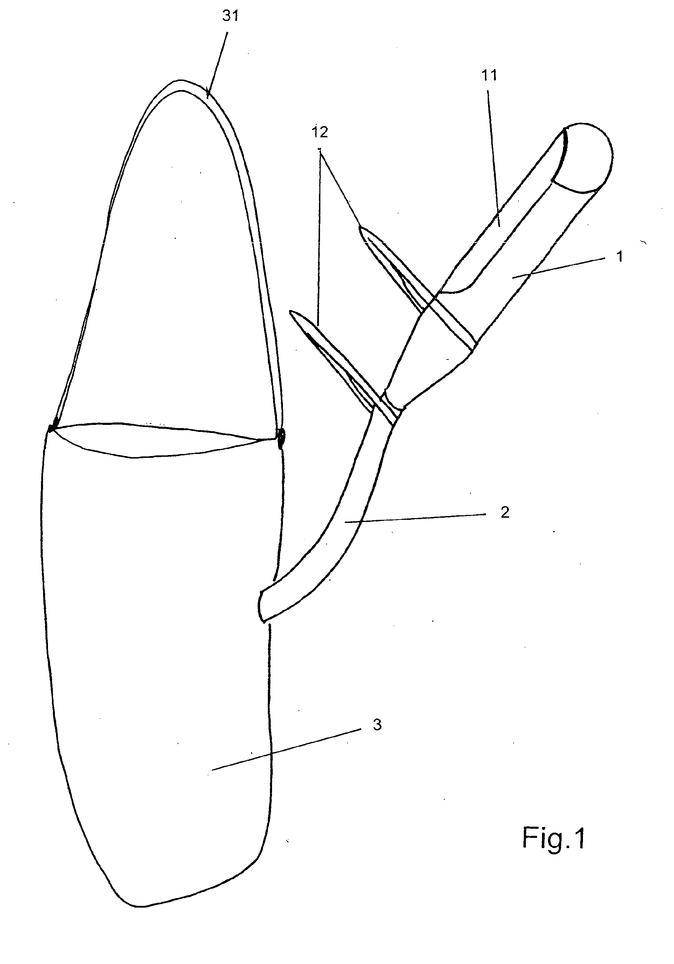

- Fig. 1:: eine Ausführungsform der erfindungsgemäßen Vorrichtung in schematischer Übersichtsdarstellung.

Die in Fig. 1 dargestellte tragbare Vorrichtung umfasst eine Auffangeinheit 1, ein Weiterleitungselement 2 und eine Sammeleinheit 3, wobei die Auffangeinheit 1 über das Weiterleitungselement 2 mit der Sammeleinheit 3 verbunden ist, so dass sphärische Gegenstände durch die Auffangöffnung 11 hindurch von der Auffangeinheit 1 in die Sammeleinheit 3 gelangen können, indem sie sich durch das Weiterleitungselement 2 hindurch bewegen.
Vorteilhaft ist die Verbindung zwischen Weiterleitungselement 2 mit der Sammeleinheit 3 lösbar.

Erfindungswesentlich ist, dass die Auffangeinheit 1 eine Auffangöffnung 11 aufweist, in der eine menschliche Hand platzierbar ist.
Die Auffangeinheit 1 ist im Betriebszustand vermittels eines Halteelements 12 am Unterarm eines Erntehelfers befestigbar.
Das Halteelement 12 ist dabei vorteilhaft ein Klettband.

Besonders vorteilhaft ist die Auffangeinheit 1 eine große Plastik-Wasserflasche mit Auffangöffnung 11 und das Weiterleitungselement 2 ein flexibler Plastikschlauch.

Das Weiterleitungselement 2 ist im Betriebszustand ebenfalls vermittels des Halteelements 12 am Unterarm eines Erntehelfers befestigbar.

Die Länge des flexiblen Weiterleitungselements 2 entspricht etwa der durchschnittlichen Armlänge eines Erntehelfers und ist individuell anpassbar.

Die Sammeleinheit 3 ist eine Umhängetasche, bspw. aus Plastik oder Stoff. Alternativ dazu kann sie auch ein Korb sein.

Die Auffangeinheit 1 und Sammeleinheit 3 sind besonders vorteilhaft über lösbare Steck- oder Schraubverbindungen mit dem Weiterleitungselement 2 verbunden.
Alternativ dazu können sie über Rohrschellen an dem Schlauch befestigt sein.

Die Sammeleinheit 3 ist mit einem verstellbaren Trageelement 31 versehen, so dass sie im Betriebszustand von einem Erntehelfer umgehängt werden kann.

Die erfindungsgemäße Vorrichtung kann wie folgt hergestellt und gehandhabt werden:

Die Auffangeinheit 1 kann aus einem teilweise ausgeschnittenem Hohlkörper (Plastik- Wasserflasche) mit den Maßen: Länge: 330 mm; Durchmesser: 100 mm; Flaschenhalslänge: 50 mm; Flaschenhalsdurchmesser: 30-50 mm bestehen.

Dazu wird ein liegender zylindrischer Flaschenhohlkörper vom Boden aus in der Mitte horizontal in Richtung Längsachse aufgeschnitten. Die Schnittlänge, ca. 200 mm, entspricht dabei etwa einer Handlänge und die Schnittführung entspricht in der Draufsicht einer Parabel. Auf diese Weise wird eine Art "Auffangschale" gebildet.
Die weitere Rumpfoberfläche der Flasche von ca. 50 mm bleibt bestehen und dient als Auflage für das Handgelenk sowie Aufnahme des Halteelements 12.
Auf den Flaschenhals wird ein Schlauch aufgeschraubt bzw. aufgesteckt und mit einer Rohrschelle befestigt.
Gleichzeitig kann der Schlauch eine zweite Fixierstelle für das Halteelement 12 bilden.

Die Halteelemente sind aus etwa 800 mm langen Klettbändern gebildet und mit der Auffangeinheit 1 und ggf. mit dem Weiterleitungselement 2 verbunden.

Durch das Weiterleitungselement 2, im Beispiel durch den flexiblen Plastikschlauch, rollen die Früchte in die Sammeleinheit 3 (bspw. Tasche oder ein Korb), die mit einem Trageelement 31 versehen ist und vermittels derer der Erntehelfer diese auf der Seite trägt, wo er mit der Vorrichtung arbeitet. Durch eine entsprechende Verlängerung des Weiterleitungselements 2 kann das Erntegut auch auf eine größere Sammeleinheit geleitet werden, die sich bspw. auf dem Boden neben dem Erntehelfer befinden kann.

Die erfindungsgemäße Vorrichtung ist so entwickelt, dass sie beidseitig links oder rechts (je nach Geschicklichkeit des Pflückers) eingesetzt werden kann.
Das Anlegen der Vorrichtung an dem Unterarm des Erntehelfers ist einfach und problemlos.
Die Hand wird über die "Auffangschale" der Auffangeinheit 1 gelegt. Das Handgelenk liegt dabei fest auf der Auffangeinheit 1.
Vermittels des ersten Halteelements 12 (bspw. Klettband) wird über das Handgelenk eine zugfeste Verbindung mit der Vorrichtung hergestellt. Über ein zweites Halteelement 12 (bspw. Klettband) kann das Weiterleitungselement 2 in gleicher Weise weiter hinten mit dem Unterarm verbunden sein. Dabei ist beim Anlegen der Vorrichtung an den Arm zu prüfen, ob die pflückende Hand nach allen Seiten frei beweglich ist. Auch der richtige Sitz der Vorrichtung (zu locker oder zu fest) muss angepasst sein. Das Anlegen und Abnehmen der Vorrichtung kann mit der freien Hand, ohne fremde Hilfe geschehen. Auch die Verbindung von Auffangeinheit 1 und Weiterleitungselement 2 bzw. Sammeleinheit 3 und Weiterleitungselement 2 kann jeweils mit einem Handgriff erledigt werden.

Bei der Verwendung der erfindungsgemäßen Vorrichtung werden für eine rationelle Arbeitsweise von der pflückenden Hand gezielt nur die Oliven oder andere Beeren bzw. Strauchfrüchte erfasst. Durch Geschicklichkeit kann sich der Erntehelfer ein gewisses Handling zulegen und damit seine Leistung erhöhen bzw. Verunreinigungen durch Blätter vermeiden.

Die Einsatzgebiete der erfindungsgemäßen Vorrichtung können vielseitig sein, entscheidend ist der Durchmesser des Weiterleitungselements 2 (Schlauchdurchmesser).
Wenn dieser bspw. bei Oliven mit 30 mm vorgesehen ist und die Innenwandung des Schlauches glatt ist, rollen die Oliven einwandfrei in die Sammeleinheit 3.

Sollen andere Früchte mit der erfindungsgemäßen Vorrichtung geerntet werden, so empfiehlt es sich, einen größeren Durchmesser des Weiterleitungselements 2 (Schlauchs) zu wählen.

Mit der erfindungsgemäßen Vorrichtung kann bspw. auch Beerenobst verschiedener Art und Größen sowie Kleinobst, Kirschen, Zwetschgen, Pflaumen, Ringlotten, Mandeln, Walnüsse, Haselnüsse, Minitomaten u.v.m. geerntet werden.

Der Vorteil der erfindungsgemäßen Vorrichtung besteht darin, dass gegenüber dem Stand der Technik bei der Anwendung dieser keine Schädigungen der abzuerntenden Bäume / Sträucher erfolgt und dass der aufwendige Arbeitsgang des Auslesens, der mehr als 50% der Arbeitszeit bei bekannten Ernteverfahren ausmacht, entfällt.
Hinzu kommt, dass durch die schonende Behandlung der Bäume / Sträucher der Olivenertrag in den folgenden Jahren noch gesteigert werden kann.

Die erfindungsgemäße Vorrichtung, deren Gewicht sehr leicht ausgeführt ist, kann mit der freien Hand mühelos und ohne fremde Hilfe angelegt und abgenommen werden. Durch das geringe Gewicht der Vorrichtung kann ein Erntehelfer mühelos ohne Ermüdungserscheinungen über längere Zeiten arbeiten.

Durch die individuelle Anpassbarkeit des Weiterleitungselements 2 (nicht zu kurz oder zu lang) wird ein bequemes Arbeiten ohne Beeinträchtigung ermöglicht.

Ganz gleich in welcher Arbeitsposition sich ein Erntehelfer befindet, hat er freie Sicht, immer eine freie Hand, kann bequem sowie sicher arbeiten und somit Unfälle weitgehend vermeiden.

Auf Grund der verschleißfesten Materialien, aus denen die erfindungsgemäße Vorrichtung besteht, ist diese strapazierfähig und bruchsicher.

Darüber hinaus sind die Materialien pflegeleicht und können hygenisch sauber gehalten werden.

Durch den effektiven Erntevorgang vermittels der erfindungsgemäßen Vorrichtung können die bisherigen Ernteverluste (von ungefähr 3 - 6 %) erheblich reduziert werden, was eine Gewinnsteigerung mit sich bringt.

Auch die Qualität der mit der erfindungsgemäßen Vorrichtung geernteten Früchte liegt höher, da die Früchte keinen großen mechanischen Belastungen ausgesetzt sind.

Hinzu kommt weiterhin, dass es durch die erfindungsgemäße Vorrichtung möglich ist, die Arbeitsleistung jedes Erntehelfers in einem bestimmten Zeitraum genau zu erfassen. Dadurch ist die Grundlage für eine professionelle leistungsgerechte Entlohnung gegeben.

Ein weiterer Vorteil der erfindungsgemäßen Vorrichtung ist, dass bei wechselhaftem Wetter die Ernte bei Regen unterbrochen werden kann, um sie dann fortzusetzen, wenn die Bäume wieder trocken sind.

Alle in der Beschreibung, dem nachfolgenden Ausführungsbeispiel, den Ansprüchen und Zeichnungen dargestellten Merkmale können sowohl einzeln als auch in beliebiger Kombination miteinander erfindungswesentlich sein.

### Bezugszeichenliste

- 1 -: Auffangeinheit
- 11 -: Auffangöffnung
- 12 -: Halteelement
- 2 -: Weiterleitungselement
- 3 -: Sammeleinheit
- 31 -: Trageelement

## Patentansprüche

1. Vorrichtung zum Ernten von Oliven und anderen auf Bäumen oder Sträuchern wachsenden Früchten umfassend eine Auffangeinheit (1), eine Weiterleitungselement (2) und eine Sammeleinheit (3), wobei die Auffangeinheit (1)
• eine Auffangöffnung (11) aufweist, auf der eine menschliche Hand platzierbar ist, und
• über das Weiterleitungselement (2) mit der Sammeleinheit (3) verbunden ist, so dass sphärische Gegenstände durch die Auffangöffnung (11) hindurch von der Auffangeinheit (1) in die Sammeleinheit (3) gelangen können, indem sie sich durch das Weiterleitungselement (2) hindurch bewegen.

2. Vorrichtung gemäß Anspruch 1, **dadurch gekennzeichnet, dass** die Auffangeinheit (1) und Sammeleinheit (3) mit dem Weiterleitungselement (2) lösbar verbunden sind.

3. Vorrichtung gemäß Anspruch 2, **dadurch gekennzeichnet, dass** die lösbaren Verbindungen Steck- oder Schraubverbindungen sind.

4. Vorrichtung gemäß Anspruch 1, **dadurch gekennzeichnet, dass** das Weiterleitungselement (2) ein flexibler Schlauch ist.

5. Vorrichtung gemäß Anspruch 1, **dadurch gekennzeichnet, dass** diese aus leichten Materialien, insbesondere Kunststoff und /oder Stoff besteht.

6. Vorrichtung gemäß Anspruch 1, **dadurch gekennzeichnet, dass** die Auffangeinheit (1) im Betriebszustand vermittels eines Halteelements (12) am Unterarm eines Erntehelfers befestigbar ist.

7. Vorrichtung gemäß Anspruch 1 oder 6, **dadurch gekennzeichnet, dass** Weiterleitungselement (2) im Betriebszustand vermittels eines Halteelements (12) am Unterarm eines Erntehelfers befestigbar ist.

8. Vorrichtung gemäß Anspruch 1, **dadurch gekennzeichnet, dass** die Sammeleinheit (3) mit einem Trageelement (31) versehen ist, so dass sie im Betriebszustand von einem Erntehelfer umgehängt werden kann.

9. Vorrichtung gemäß Anspruch 8, **dadurch gekennzeichnet, dass** das Trageelement (31) verstellbar ist.

10. Vorrichtung gemäß einem oder mehrere der voranstehenden Ansprüche , **dadurch gekennzeichnet, dass** sie tragbar ist.
